# FASCICULE DE BREVET EUROPEEN

(11) **EP 4 197 386 B1**
(45) Date de publication et mention de la délivrance du brevet: **07.08.2024**
(21) Numéro de dépôt: 21216076.6
(22) Date de dépôt: 20.12.2021
(51) Int. Cl.: A44C 5/14, A44B 11/25, G04B 37/14

(54) **OBJET PORTABLE COMPORTANT UN BOITIER, UN BRACELET AMOVIBLE ET UN SYSTÈME DE FIXATION DU BRACELET AU BOITIER**
TRAGBARER GEGENSTAND MIT EINEM GEHÄUSE, EINEM ABNEHMBAREN ARMBAND UND EINEM SYSTEM ZUR BEFESTIGUNG DES ARMBANDS AM GEHÄUSE
PORTABLE OBJECT COMPRISING A HOUSING, A REMOVABLE BAND AND A SYSTEM FOR ATTACHING THE BAND TO THE HOUSING

(43) Date de publication de la demande: 21.06.2023
(73) Titulaire: ETA SA Manufacture Horlogère Suisse, 2540 Grenchen (CH)
(72) Inventeur: SCHLICHTIG, Dohan, 4663 Aarburg (CH); WILLEMIN, Roger, 2540 Grenchen (CH)
(74) Mandataire: ICB SA

(56) Documents cités:
- CN-A- 106 539 207
- US-B2- 9 357 817

## Description

### Domaine technique de l'invention

La présente invention concerne un objet portable comportant un boitier et un bracelet connecté au boitier, destiné à être porté au poignet de l'utilisateur. L'invention concerne plus particulièrement un dispositif de fixation amovible du bracelet au boitier de l'objet portable, permettant le montage et le démontage du bracelet sans utilisation d'outil.

L'invention concerne plus particulièrement une montre-bracelet comportant une boîte de montre et un bracelet connecté à ladite boîte de montre, via un dispositif de fixation amovible du bracelet à la boîte de montre.

### Arrière-plan technologique

Les dispositifs de fixation permettant la fixation d'un bracelet sur une boîte de montre sont généralement assez complexes, tant par le nombre de pièces différentes qu'ils requièrent pour l'assemblage que par la complexité de ces pièces ainsi que leur difficulté de fabrication.

En particulier, les extrémités de chaque brin du bracelet ainsi que la boîte de montre doivent être spécialement conformées, usinées, pour pouvoir s'assembler. De plus le montage de ces divers éléments est assez long et par conséquent coûteux.

Les dispositifs de fixation usuels sont basés sur la présence de deux cornes, ou autres éléments en saillie, ménagées sur le pourtour de la carrure de la boîte de montre, d'une barrette transversale insérée à l'extrémité d'un brin de bracelet, chaque extrémité de la barrette transversale venant s'insérer dans un orifice ménagé au niveau de chaque corne.

Ce type de fixation d'un bracelet sur une boîte de montre nécessite l'utilisation d'un outil spécifique pour l'interchangeabilité du bracelet. Par conséquent, si l'utilisateur vent changer son bracelet pour une question d'usure ou d'esthétisme, il se retrouve généralement dans l'obligation de se rendre chez un professionnel pour effectuer cette opération de remplacement. Cette opération nécessite ainsi du temps et engendre un certain coût.

D'un point de vue industriel, les cornes, ou autres éléments, venant en saillie sur le pourtour de la carrure empêchent l'automatisation de nombreuses opérations lors de la fabrication de la boîte de montre ou encore lors de la finition. Ainsi, certaines opérations nécessitent d'être réalisées manuellement afin d'éviter d'endommager les cornes ou autres éléments en saillie.

Il est connu des dispositifs de fixation permettant de faciliter l'interchangeabilité des bracelets. Toutefois, ces dispositifs de fixation sont généralement complexes à réaliser et nécessitent l'utilisation de pièces intercalaires entre le brin du bracelet et la boîte de montre pour assurer le verrouillage du bracelet, comme par exemple des ressorts, des lames, etc.

De plus, les dispositifs de fixation proposant une interchangeabilité simplifiée des bracelets nécessitent d'importantes modifications de la boîte de montre et/ou du bracelet sans pour autant faciliter la méthode de fabrication de ces éléments, ce qui engendre des coûts supplémentaires lors de fabrication.

Le document CN106539207A décrit un objet portable avec les caractéristiques du préambule de la revendication 1.

Par conséquent, il existe un besoin pour améliorer les dispositifs de fixation amovible d'un bracelet sur une boîte de montre, et plus généralement d'un bracelet sur un objet portable, afin de remédier à au moins une des limitations connues et décrites précédemment.

### Résumé de l'invention

Dans ce contexte, l'invention a pour objectif de proposer un dispositif de fixation amovible d'un bracelet à un boitier d'un objet portable de conception simple, peu coûteux, ne nécessitant pas de pièce intercalaire entre le bracelet et le boitier de l'objet portable pour assurer le couplage élastique et le verrouillage. Ainsi, l'invention offre une solution « monobloc » ne nécessitant pas l'utilisation de pièces supplémentaires pour l'emboîtement et le blocage en position du bracelet sur le boitier.

L'invention a également pour but de proposer un dispositif de fixation permettant un montage et un démontage simple du bracelet sur le boitier sans l'utilisation d'outil. Ainsi, l'utilisateur peut changer facilement son bracelet en cas d'usure, ou pour modifier l'esthétisme, sans faire appel à un professionnel.

L'invention a également pour but de proposer un dispositif de fixation permettant une fabrication aisée des pièces, de sorte que le bracelet et le boitier peuvent être entièrement automatisés par des moyens classiques et ne nécessitent pas d'opération de reprise manuelle du dispositif de fixation.

Le dispositif de fixation selon l'invention permet de proposer un boitier où la carrure est dépourvue de corne, et d'élément en saillie pour le montage du bracelet, ce qui permet d'avoir un boitier symétrique et facilement automatisable.

A cette fin, l'invention concerne un objet portable comportant un boitier présentant une carrure, un bracelet, et un système de fixation pour solidariser de manière amovible chaque extrémité dudit bracelet à ladite carrure, ladite carrure comportant deux cavités longitudinales configurées pour former une glissière, chaque extrémité dudit bracelet comportant une tête d'accroche de forme complémentaire et configurée pour coopérer par glissement avec une des cavités longitudinales pour former le système de fixation, ledit objet portable étant caractérisé en ce que le système de fixation comporte des moyens d'emboitage élastique pour verrouiller le mouvement axial de ladite tête d'accroche à l'intérieur de ladite cavité longitudinale, les moyens d'emboitage élastique comportant :
- une protubérance de verrouillage rigide, ménagée sur une paroi intérieure de chacune des cavités longitudinales, coopérant avec ;
- deux obstacles ménagés au voisinage d'une portion élastique des têtes d'accroche, lesdits obstacles délimitant un espace inter-obstacle dimensionné pour recevoir ladite protubérance de verrouillage et former des moyens de blocage de ladite protubérance de verrouillage ;
- les moyens d'emboitage élastique étant configurés pour déformer élastiquement ladite portion élastique de la tête d'accroche lors de l'insertion du bracelet, de manière à permettre le passage de ladite protubérance de verrouillage au-delà des obstacles et à bloquer ladite protubérance de verrouillage dans l'espace inter-obstacle verrouillant le mouvement axial de ladite tête d'accroche par retour élastique de la portion élastique.

Outre les caractéristiques évoquées dans le paragraphe précédent, l'objet portable selon l'invention peut présenter une ou plusieurs caractéristiques complémentaires parmi les suivantes, considérées individuellement ou selon toutes les combinaisons techniquement possibles :
- les moyens d'emboitage élastique sont configurés pour déformer élastiquement ladite portion élastique de la tête d'accroche en direction du fond de la cavité longitudinale ;
- la portion élastique des têtes d'accroche est une zone de moindre épaisseur formée par un évidement ménagé au niveau de l'extrémité des têtes d'accroche ;
- les têtes d'accroche comportent une rainure dimensionnée pour recevoir la protubérance de verrouillage, lesdits deux obstacles étant ménagés dans ladite rainure ;
- ladite rainure est ménagée au niveau d'une surface inférieure des têtes d'accroche ;
- les deux obstacles ménagés au voisinage de la portion élastique des têtes d'accroche présentent une forme de rampe dont les portions les plus épaisses des rampes délimitent l'espace inter-obstacle ;
- les deux obstacles en forme de rampe présentent un plan incliné orienté dans la direction de glissement de la tête d'accroche dans la cavité longitudinale ;
- les moyens d'emboitage élastique sont configurés pour être réversibles et permettre le déverrouillage de la position axiale des têtes d'accroche sans endommagement d'un des éléments constituant lesdits moyens d'emboitage élastique ;
- le bracelet comporte deux brins, chaque brin comportant une tête d'accroche formant l'extrémité du brin, la tête d'accroche étant venue de matière avec ledit brin du bracelet ;
- les têtes d'accroche sont en matière polymère, préférentiellement en matière thermoplastique ;
- les têtes d'accroche sont en élastomère thermoplastique ;
- ladite carrure du boitier est en thermoplastique, préférentiellement en polyamide 11 ;
- le système de fixation est configuré pour permettre le montage du bracelet indifféremment par une première extrémité ou par une deuxième extrémité de la cavité longitudinale ;
- les cavités longitudinales s'étendent sur deux segments circulaires de la carrure situés à 6h et à 12h.

Avantageusement, l'objet portable est une montre bracelet.

### Brève description des figures

Les buts, avantages et caractéristiques de la présente invention apparaîtront à la lecture de la description détaillée ci-dessous faisant référence aux figures suivantes :
- la figure 1 représente une première vue en perspective, d'un exemple de réalisation d'un objet portable selon l'invention ;
- la figure 2 illustre une deuxième vue en perspective de l'exemple de réalisation de l'objet portable selon l'invention, dans laquelle un brin de bracelet est représenté non emboité dans la carrure ;
- la figure 2a est un agrandissement d'une portion de la figure 2 illustrant de manière plus détaillée une portion de carrure comportant une cavité longitudinale ;
- la figure 3 représente une section de l'objet portable, selon le plan y, z du boitier permettent d'illustrer la section transversale des cavités longitudinales et des têtes d'accroche verrouillées dans les cavités longitudinales ;
- la figure 4 et la figure 5 illustrent plus particulièrement un brin du bracelet au niveau de la tête d'accroche ; la figure 4 étant une vue en perspective illustrant plus particulièrement la surface supérieure du brin, et la figure 5 étant une vue en perspective illustrant plus particulièrement la surface inférieure du brin ;
- les figures 6a à 6c illustrent les différentes phases du montage du bracelet sur la carrure de l'objet portable selon l'invention.

Dans toutes les figures, les éléments communs portent les mêmes numéros de référence sauf précision contraire.

### Description détaillée de l'invention

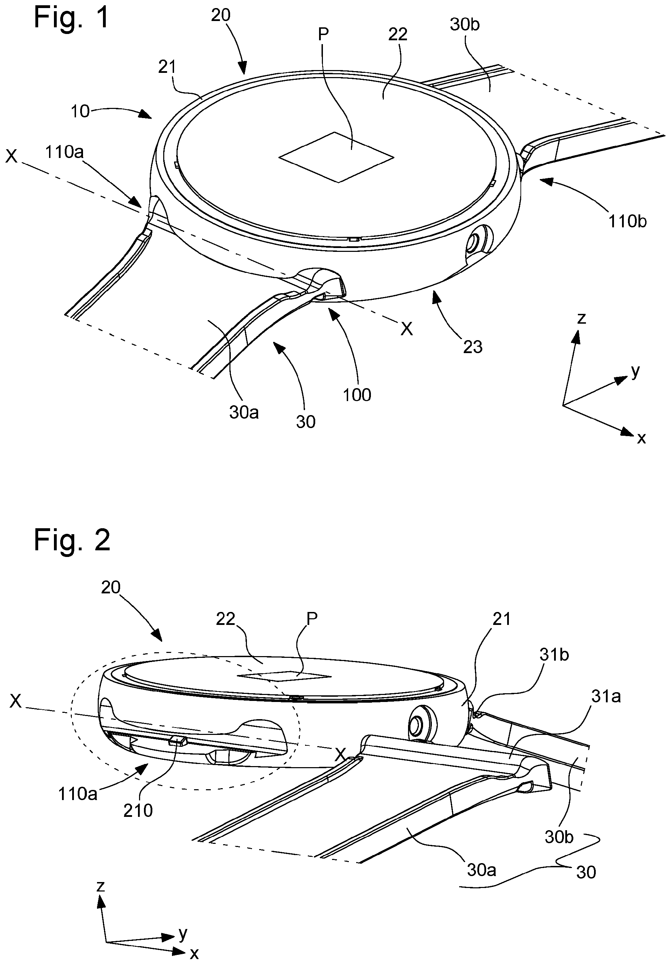

La figure 1 illustre une première vue en perspective, d'un exemple de réalisation d'un objet portable 10 selon l'invention. Cet objet portable prend ici la forme d'une pièce d'horlogerie, telle qu'une montre bracelet destinée à être portée au poignet de l'utilisateur. On comprendra également que l'objet portable 10 peut être, par exemple, un podomètre, un cardio-fréquencemètre, ou tout autre objet portable destiné à être porté par l'intermédiaire d'un bracelet, par exemple au niveau du poignet.

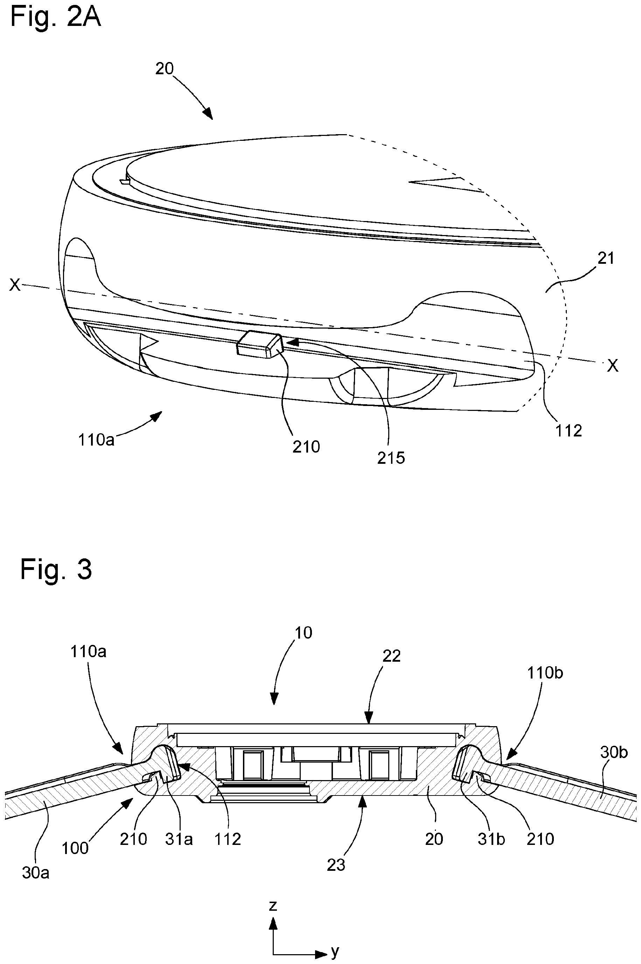

La figure 2 illustre une deuxième vue en perspective de l'exemple de réalisation de l'objet portable 10 selon l'invention, dans laquelle un brin de bracelet est représenté non emboité dans la carrure.

La figure 2a est un agrandissement d'une portion de la figure 2 illustrant de manière plus détaillée une portion de carrure comportant une cavité longitudinale ;

L'objet portable 10 comporte un boitier 20, destiné à recevoir par exemple un mouvement d'horlogerie (non représenté ici pour des raisons de clarté). Le mouvement d'horlogerie porte et entraine des moyens d'affichage d'une information, par exemple l'heure courante.

Le boitier 20 est constitué d'une carrure 21 fermée par un fond 23 en partie inférieure et par une glace 22 en partie supérieure. Le boitier 20 peut également comporter une lunette (non représentée) montée sur la carrure 21 et pouvant porter la glace 22, la lunette pouvant être rotative ou non.

Le boitier 20 définit un plan principal P visible, par exemple, sur la figure 1, d'axe transversal x et d'axe longitudinal y. L'axe z s'étend perpendiculairement au plan P, et défini l'axe de l'épaisseur du boitier 20. Le plan P est avantageusement parallèle à la partie plane d'une platine que comporte le mouvement d'horlogerie.

Dans l'exemple de réalisation illustré, l'axe transversal x est parallèle à l'axe horaire 3h-9h et l'axe longitudinal y est parallèle à l'axe horaire 6h-12h.

Le boitier 20 illustré à titre d'exemple est de forme générale circulaire. Toutefois, le boitier 20 peut présenter d'autres formes d'exécution connues sans sortir du contexte de l'invention.

L'objet portable 10 comporte également un bracelet 30 souple, amovible, dont les deux extrémités sont destinées à être couplées de manière amovible à la carrure 21 du boitier 20, via un système de fixation 100. Le système de fixation 100 permet de solidariser le bracelet 30 au boitier 20, de verrouiller celui-ci en position, et rend possible une interchangeabilité aisée du bracelet 30, sans l'utilisation d'outil.

Le système de fixation 100 permet de réaliser un emboitement élastique du bracelet 30, de manière réversible, en opposition à un système par emboitement élastique, dit irréversible, nécessitant la destruction ou la détérioration d'au moins un des éléments constituant le système de fixation lors du désassemblage de bracelet 30 du boitier 20.

Le bracelet 30 se présente sous la forme de deux brins 30a, 30b reliés l'un à l'autre par un dispositif de fermeture (non représenté), par exemple un fermoir, une boucle déployante ou encore tout autre élément ad-hoc permettant de réaliser cette fonction d'attache des deux brins 30a, 30b du bracelet 30 autour du poignet de l'utilisateur.

Selon une variante de réalisation, le bracelet 30 est un monobrin.

La carrure 21 comporte deux cavités longitudinales 110a, 110b configurées pour recevoir l'extrémité de chaque brin 30a, 30b du bracelet 30, et plus particulièrement de têtes d'accroche 31a, 31b formant les extrémités de chaque brin 30a, 30b du bracelet 30. Une première cavité longitudinale 110a est représentée plus particulièrement en vue agrandie à la figure 2.

Les cavités longitudinales 110a, 110b sont ménagées dans la carrure 21 et remplacent avantageusement les cornes de fixation couramment utilisées pour réaliser la fixation du bracelet. Les cavités longitudinales 110a, 110b coopèrent avec les têtes d'accroche 31a, 31b des brins 30a, 30b du bracelet 30 pour former le système de fixation 100 du bracelet 30.

Ainsi, on constate que la carrure 21 du boitier 20 selon l'invention ne comporte aucun élément en saillie pour la fixation du bracelet 30. De ce fait, Ia fabrication du boitier 20 peut être réalisée intégralement de manière automatisée.

Les cavités longitudinales 110a, 110b sont réalisées au niveau de deux portions de fixation, opposées l'une à l'autre, situées de part et d'autre d'un cadran (non représenté), et avantageusement localisées à 6h et à 12h.

Les cavités longitudinales 110a, 110b s'étendent sur deux segments circulaires de la carrure 21 situés à 6h et à 12h.

Les cavités longitudinales 110a, 110b forment des glissières s'étendant le long d'un axe longitudinal formant un axe de glissement X-X, parallèle à l'axe transversal *x* du boitier 20.

Les cavités longitudinales 110a, 110b sont configurées pour recevoir les têtes d'accroche 31a, 31b des brins 30a, 30b du bracelet 30 et pour assurer un guidage en translation des têtes d'accroche 31a, 31b, le long de l'axe de glissement X-X, lors du montage ou du démontage du bracelet 30.

Ainsi, les brins 30a, 30b sont montés sur la carrure 21 par glissement des têtes d'accroche 31a, 31b dans les cavités longitudinales 110a, 110b de la carrure 21.

Les cavités longitudinales 110a, 110b sont débouchantes, c'est-à-dire qu'elles sont ouvertes au niveau d'une première extrémité et d'une deuxième extrémité, de sorte qu'il est possible d'introduire et de retirer le bracelet 30 par glissement aussi bien par la première extrémité que par la deuxième extrémité des cavités longitudinales 110a, 110b, c'est-à-dire par l'extrémité située côté couronne (coté 3h) ou par l'extrémité située du côté opposé à la couronne (côté 9h).

Les têtes d'accroche des brins 30a, 30b présentent une forme complémentaire et adaptée pour venir se loger dans les cavités longitudinales 110a, 110b et pour coopérer par glissement rectiligne, le long de l'axe de glissement X-X, dans les cavités longitudinales 110a, 110b.

La figure 3 représente une section de la montre bracelet 10, selon le plan y, z permettant d'illustrer la section transversale des cavités longitudinales 110a, 110b et des têtes d'accroche 31a, 31b verrouillées dans les cavités longitudinales 110a, 110b.

On remarque ainsi que les cavités longitudinales 110a, 110b présentent une section sensiblement en forme de crochet. Avantageusement, les cavités longitudinales 110a, 110b présentent une portion en contre-dépouille permettant de bloquer les déplacements du bracelet à l'exception de ceux de translation le long de l'axe de glissement X-X, correspondant à l'axe longitudinal des cavités longitudinales 110a , 110b.

Une telle forme permet avantageusement d'autoriser une translation des brins 30a, 30b dans les cavités longitudinales 110a, 110b par glissement tout en bloquant les autres degrés de liberté par la présence d'une épaisseur de matière supplémentaire au niveau de l'extrémité des têtes d'accroche 31a, 31b, par rapport aux brins 30a, 30b.

Bien entendu d'autres formes de réalisation sont également envisagées. Par exemple les cavités longitudinales 110a, 110b et les têtes d'accroche complémentaires peuvent présenter une section de forme circulaire, en L, en T, en C, etc.

Le système de fixation 100 comporte en outre des moyens d'emboitage élastique permettant de sécuriser et de verrouiller le mouvement axial de chaque brin 30a, 30b dans les cavités longitudinales 110a, 110b de la carrure 21, pour verrouiller la position de chaque brin 30a, 30b dans une position dite de verrouillage.

Les moyens d'emboitage élastique sont des moyens d'emboitage élastique configurés pour réaliser un emboîtement élastique réversible des têtes d'accroche 31a, 31b des brins 30a, 30b sur la carrure 21, par clippage/déclippage.

Les moyens d'emboitage élastique comportent une protubérance de verrouillage 210, visible particulièrement à la figure 2, telle que par exemple un plot ou un doigt. La protubérance de verrouillage 210 est rigide et centrée dans chaque cavité longitudinale 110a, 110b, par rapport à l'axe de glissement X-X.

Avantageusement la protubérance de verrouillage 210 est venue de matière avec la carrure 21.

La protubérance de verrouillage 210 est configurée pour coopérer avec une rainure 220 ménagée au niveau d'une surface inférieure des têtes d'accroche 31a, 31b des brins 30a, 30b. Lors du montage du bracelet 30, la protubérance de verrouillage 210 vient s'insérer dans la rainure 220. La rainure 220 est dimensionnée pour recevoir la protubérance de verrouillage 210.

Dans l'exemple de réalisation illustré à titre d'exemple, la rainure 220 est ménagée au niveau d'une surface inférieure des têtes d'accroches 31a, 31b ; toutefois, il est également possible sans sortir du contexte de l'invention de réaliser ladite rainure au niveau d'une surface supérieure des têtes d'accroche en modifier la forme de la section des têtes, par exemple en inversant la forme du crochet, et en modifiant la position de la protubérance de verrouillage 210 de manière à coopérer avec la rainure.

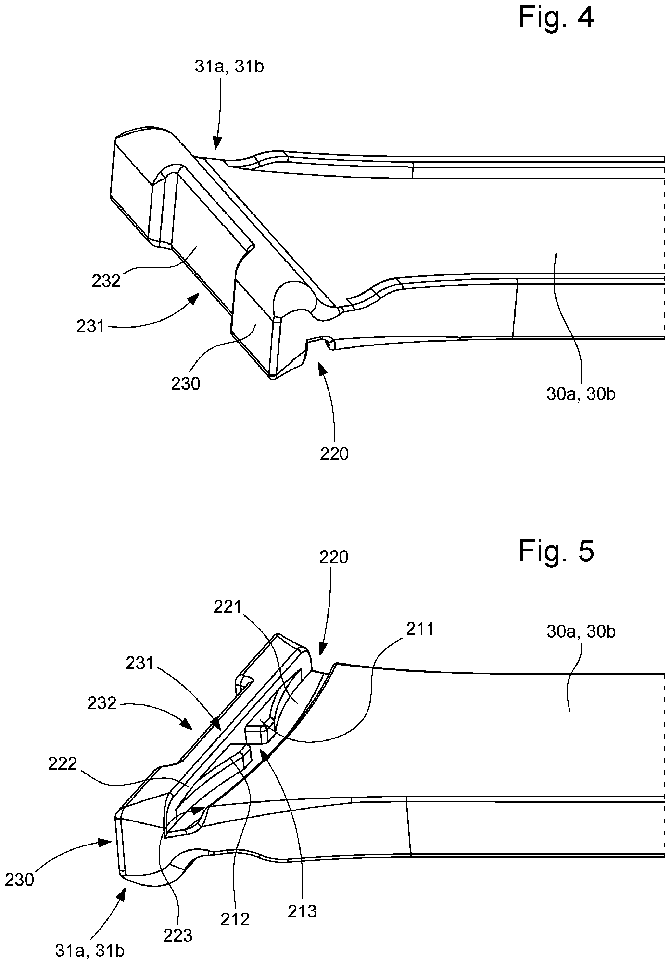

La figure 4 et la figure 5 illustrent plus particulièrement un brin 30a, 30b du bracelet 30 au niveau de la tête d'accroche 31a, 31b. La figure 4 est une vue en perspective illustrant plus particulièrement la surface supérieure du brin 30a, 30b, et la figure 5 est une vue en perspective illustrant plus particulièrement la surface inférieure du brin 30a, 30b.

Il est évident qu'on entend par surface inférieure du brin d'un bracelet la surface destinée à venir au moins partiellement en contact avec la peau de l'utilisateur, et on considère comme surface supérieure du brin, la surface opposée à la surface inférieure.

La rainure 220 est délimitée par un fond 221, et deux faces latérales 222, 223.

Une première face latérale 222 est sensiblement plane alors que la deuxième face latérale 223 est courbe de manière coopérer avec la forme circulaire de la carrure 21.

La première face latérale 222 est située à une certaine distance d'une face latérale d'extrémité 230 des têtes d'accroche 31a,31b et orientée sensiblement de manière parallèle.

La rainure 220 porte deux obstacles 211, 212 configurés pour coopérer avec la protubérance de verrouillage 210, de manière à venir déformer élastiquement une portion élastique 231 des têtes d'accroche 31a, 31b sous l'effort généré par le passage de la protubérance sur les obstacles lors du montage d'un brin 30a, 30b dans une cavité longitudinale 110a, 110b.

Avantageusement, les obstacles 211, 212 sont ménagés au voisinage de la portion élastique 231 des têtes d'accroche 31a, 31b, la portion élastique 231 étant une portion destinée à être déformée lors du passage de la protubérance de verrouillage 210 sur les obstacles 211, 212.

Avantageusement, les obstacles 211, 212 sont des rampes. Toutefois, d'autres formes sont envisagées.

Les rampes 211, 212 sont ménagées de manière à faire saillie par rapport à la première face latérale 222.

Les rampes 211, 212 sont positionnées de manière à ce que les portions les plus épaisses soient dirigées vers une région médiane de la rainure 220. Ainsi, les portions les plus épaisses des deux rampes 211, 212 se font face.

Un espace inter-obstacle 213 est délimité entre les deux rampes 211, 212. Cet espace inter-obstacle 213 est ménagé entre les portions les plus épaisses des rampes et est destiné à recevoir la protubérance de verrouillage 210 et à former des moyens de blocage pour bloquer le mouvement axial du brin 30a, 30b dans la cavité longitudinale 110a, 110b.

La protubérance de verrouillage 210 coopère avec l'espace inter-obstacle 213 pour former les moyens d'emboitage élastique du bracelet 30 et pour verrouiller le mouvement axial de la tête d'accroche 31a, 31b par retour élastique de la portion élastique 231 lorsque la protubérance de verrouillage 210 est positionnée dans l'espace inter-obstacle 213.

Le plan incliné de chaque rampe 211, 212 s'étend selon l'axe longitudinal de la rainure 220. Le plan incliné peut être courbe ou encore plan. Avantageusement, le plan incliné de chaque rampe est courbe de manière à rendre l'effort de montage plus important à proximité du verrouillage qu'au début du montage, lors de l'introduction du bracelet 30 dans chaque cavité longitudinale 110a, 110b.

La portion élastique 231 des têtes d'accroche 31a, 31b est une zone de moindre épaisseur ménagée au niveau de l'extrémité des têtes d'accroche 31a, 31b, de sorte que les moyens d'emboitage élastique déforment élastiquement cette portion élastique 231 en poussant la matière en direction du boitier 20 ou du fond 112 de la cavité longitudinale 110, 110b, sensiblement le long de l'axe longitudinale y du boitier 20.

La portion élastique 231 des têtes d'accroche 31a, 31b est ménagée au niveau de la face latérale d'extrémité 230 des têtes d'accroche 31a, 31b.

La face latérale d'extrémité 230 présente un évidement central 232 située au moins en partie vis-à-vis des rampes 211, 212.

L'évidement central 232 permet de former la zone de moindre épaisseur au niveau de l'extrémité des têtes d'accroche 31a, 31b, et donc la portion élastique 231.

Lors du glissement du brin 30a, 30b, la protubérance de verrouillage 210 met progressivement sous contrainte la portion d'extrémité des têtes d'accroche 31a,31b par la coopération des rampes 211, 212 et de la protubérance de verrouillage 210, occasionnant une déformation élastique de la portion centrale évidée 231. La déformation élastique permet le passage de la protubérance de verrouillage 210 au-delà des rampes 211,212 et le logement de la protubérance de verrouillage 210 dans l'espace inter-obstacle 213.

Les têtes d'accroche 31a, 31b de chaque brin 30a, 30b du bracelet 30 sont avantageusement réalisées dans une matière plus souple que la carrure 21 du boitier 20 de manière à permettre la déformation de la portion élastique 231 lors du montage du bracelet 30.

Avantageusement, au moins les têtes d'accroche 31a, 31b du bracelet 30 sont réalisées en matière polymère, par exemple en matière thermoplastique.

Avantageusement, les têtes d'accroche 31a, 31b sont réalisées en élastomère thermoplastique, de type TPV (pour ThermoPlastic Vulcanizate en langue anglaise), TPU (pour thermoplastic polyurethane en langue anglaise), TPE (pour thermoplastic elastomer en langue anglaise) ou encore TPO (pour thermoplastic polyolefin en langue anglaise). A titre d'exemple, les têtes d'accroche 31a, 31b peuvent être réalisées en Opti-Flex^{™}.

A titre d'exemple, les têtes d'accroche 31a, 31b du bracelet 30 peuvent être réalisées dans une matière identique ou différente du reste des brins 30a, 30b du bracelet 30.

A titre d'exemple, la carrure 21 est réalisée en matière métallique ou en polymère. Avantageusement, la carrure 21 est réalisée en thermoplastique. A titre d'exemple, la carrure 21 peut être réalisée en polyamide 11, également appelé polyundécanamide ou nylon 11.

La carrure 21 est avantageusement une carrure monobloc. Toutefois, il est également envisagé de réaliser une carrure assemblée à partir de plusieurs pièces fabriquées séparément.

Avantageusement, la carrure en polymère est une carrure monobloc réalisée par injection.

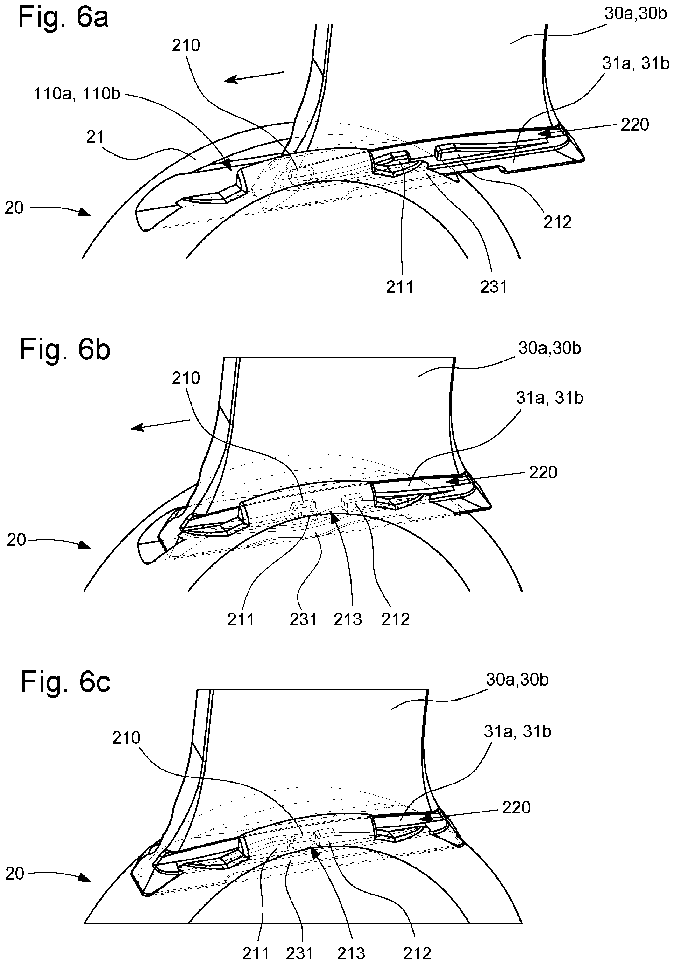

Le montage du bracelet 30 sur la carrure 21 du boitier 20 est réalisé de la manière suivante. Les figures 6a à 6c permettent d'illustrer les différentes phases du montage.

Dans une première phase, illustrée par la figure 6a, chaque brin 30a, 30b est introduit dans une cavité longitudinale110a, 110b de la carrure 21.

Les cavités longitudinales 110a, 110b et les rampes 211, 212 étant symétriques, un montage du bracelet 30 peut être réalisé indifféremment par une première extrémité ou par une deuxième extrémité des cavités longitudinales110a, 110b, c'est-à-dire par l'extrémité située côté couronne ou par l'extrémité du côté opposé.

Chaque brin 30a, 30b est ensuite glissé dans une cavité longitudinale 110a, 110b selon l'axe de glissement X-X de la cavité longitudinale 110a, 110b, par exemple dans le sens de montage choisi, par exemple dans le sens indiqué sur la figure 6a. Lors de l'insertion du brin 30a, 30b, la protubérance de verrouillage 210 est introduite dans la rainure 220. La protubérance de verrouillage 210 présente une face de contact 215 en contact, ou à minima en regard, avec la première face latérale 222 de la rainure 220. La face de contact 215 de la protubérance de verrouillage 210 coopère ensuite avec le plan incliné de la rampe 211, 212 et glisse sur celui-ci lors de l'insertion supplémentaire du brin 30a, 30b dans la cavité longitudinale 110a, 110b.

Cette phase est illustrée plus particulièrement à la figure 6b.

En glissant sur le plan incliné de la rampe 211, 212, et sous l'effort d'insertion fourni par l'utilisateur, la protubérance de verrouillage 210 met progressivement en contrainte l'extrémité de la tête d'accroche 31a, 31b et plus particulièrement la portion centrale évidée 231 jusqu'à arriver à une déformation élastique de cette zone de la tête d'accroche 31a, 31b.

Le jeu ménagé entre la portion centrale évidée 231 et le fond 112 de la cavité longitudinale 110a, 110b autorise la matière à se déformer élastiquement, ce qui permet de passer la rampe 211, 212 et de positionner la protubérance de verrouillage 210 dans l'espace inter-obstacle 213, comme illustré à la figure 6c.

Une fois la protubérance de verrouillage 210 insérée dans l'espace inter-obstacle 213, le bracelet 30 est alors verrouillé en position dans le boitier 20, la protubérance de verrouillage 210 étant bloquée latéralement contre les parois latérales des rampes 211, 212.

Pour déverrouiller le bracelet 30 et pour procéder à son démontage, l'utilisateur doit compresser l'extrémité du brin 30a, 30b contre le boitier 20 de manière à venir déformer élastiquement l'extrémité de la tête d'accroche 31a, 31b, et plus particulièrement la région centrale où se situe l'espace inter-rampes 213, de manière à amener le plan incliné des rampes 211, 212 au niveau de la face de contact 215 de la protubérance de verrouillage 210 de manière à dégager celui-ci de l'espace inter-rampes 213.

Lorsque la protubérance de verrouillage 210 n'est plus emprisonnée dans l'espace inter-obstacles 213, le brin 30a, 30b peut être sorti de la cavité longitudinale 110a, 110b par glissement par la première extrémité ou la deuxième extrémité, en exerçant une translation selon l'axe de glissement X-X.

Le boitier et le système de fixation d'un bracelet au boitier selon l'invention permettent de faciliter grandement le procédé de production du boitier, puisque celui-ci est dépourvu de cornes de fixation et est entièrement symétrique. Ainsi, la fabrication du boitier et du bracelet peut être automatisée. Les coûts de fabrication d'un tel ensemble et d'un tel objet portable sont en conséquence diminués, notamment par l'absence d'opération de reprise au niveau du boitier et par l'absence d'utilisation d'éléments supplémentaires, comme des barrettes, pour la fixation du bracelet au boitier.

Le système de fixation selon l'invention permet avantageusement de s'affranchir de l'utilisation de pièces supplémentaires ou intercalaires entre le bracelet et la carrure du boitier, tels que des barrettes, des clips élastiques, etc, ou de la nécessité d'utilisation d'outils (qu'ils soient spécifiques ou d'usage courant) pour la sécurisation et/ou le désassemblage du bracelet.

De plus, le système de fixation selon l'invention permet de simplifier l'interchangeabilité des bracelets, ce qui permet de pouvoir renouveler facilement son bracelet en cas d'usure, ou de modifier l'esthétisme, avec une manipulation simple, sans l'utilisation d'outil et sans endommagement d'un des éléments du système de fixation lors du désassemblage du bracelet.

L'invention a été décrite avec une forme particulière d'exécution du boitier et des extrémités des brins du bracelet. Toutefois, il est évident que d'autres formes d'exécution, ainsi que celles dérivant de celle décrite, sont envisagées.

## Revendications

1. Objet portable (10) comportant un boitier (20) présentant une carrure (21), un bracelet (30), et un système de fixation (100) pour solidariser de manière amovible chaque extrémité dudit bracelet (30) à la carrure (21), la carrure (21) comportant deux cavités longitudinales (110a, 110b) configurées pour former une glissière, chaque extrémité du bracelet (30) comportant une tête d'accroche (31a, 31b) de forme complémentaire et configurée pour coopérer par glissement avec une des cavités longitudinales (110a, 110b) pour former le système de fixation (100), le système de fixation (100) comportant des moyens d'emboitage élastique (210, 211, 212, 213) pour verrouiller le mouvement axial de ladite tête d'accroche (31a, 31b) à l'intérieur de la cavité longitudinale (110a, 110b), ledit objet portable (10) étant **caractérisé en ce que** les moyens d'emboitage élastique (210, 211, 212, 213) comportent:
- une protubérance de verrouillage (210) rigide, ménagée sur une paroi intérieure de chacune des cavités longitudinales (110a, 110b), coopérant avec ;
- deux obstacles (211, 212) ménagés au voisinage d'une portion élastique (231) des têtes d'accroche (31a, 31b), les obstacles (211, 212) délimitant un espace inter-obstacle (213) dimensionné pour recevoir la protubérance de verrouillage (210) et former des moyens de blocage de la protubérance de verrouillage (210) ;
- les moyens d'emboitage élastique (210, 211, 212, 213) étant configurés pour déformer élastiquement la portion élastique (231) de la tête d'accroche (31a, 31b) lors de l'insertion du bracelet (30), de manière à permettre le passage de la protubérance de verrouillage (210) au-delà des obstacles (211, 212) et à bloquer la protubérance de verrouillage (210) dans l'espace inter-obstacle (213) verrouillant le mouvement axial de la tête d'accroche (31a, 31b) par retour élastique de la portion élastique (231).

2. Objet portable (10) selon la revendication 1, **caractérisé en ce que** les moyens d'emboitage élastique (210, 211, 212, 213) sont configurés pour déformer élastiquement la portion élastique (231) de la tête d'accroche (31a, 31b) en direction du fond (112) de la cavité longitudinale (110a, 110b).

3. Objet portable (10) selon l'une des revendications précédentes, **caractérisé en ce que** la portion élastique (231) des têtes d'accroche (31a, 31b) est une zone de moindre épaisseur formée par un évidement (232) ménagé au niveau de l'extrémité des têtes d'accroche (31a, 31b).

4. Objet portable (10) selon l'une des revendications précédentes, **caractérisé en ce que** les têtes d'accroche (31a, 31b) comportent une rainure (220) dimensionnée pour recevoir la protubérance de verrouillage (210), les deux obstacles (211, 212) étant ménagés dans la rainure (220).

5. Objet portable (10) selon la revendication précédente, **caractérisé en ce que** la rainure (220) est ménagée au niveau d'une surface inférieure des têtes d'accroche (31a, 31b).

6. Objet portable (10) selon l'une des revendications précédentes, **caractérisé en ce que** les deux obstacles (211, 212) ménagés au voisinage de la portion élastique (231) des têtes d'accroche (31a, 31b) présentent une forme de rampe dont les portions les plus épaisses des rampes délimitent l'espace inter-obstacle (231).

7. Objet portable (10) selon la revendication précédente, **caractérisé en ce que** les deux obstacles (211, 212) en forme de rampe présentent un plan incliné orienté dans la direction de glissement de la tête d'accroche (31a, 31b) dans la cavité longitudinale (110a, 110b).

8. Objet portable (10) selon l'une des revendications précédentes, **caractérisé en ce que** les moyens d'emboitage élastiques (210, 211, 212, 213) sont configurés pour être réversibles et permettre le déverrouillage de la position axiale des têtes d'accroche (31a, 31b) sans endommagement d'un des éléments constituant les moyens d'emboitage élastique.

9. Objet portable (10) selon l'une des revendications précédentes, **caractérisé en ce que** le bracelet (30) comporte deux brins (30a, 30b), chaque brin comportant une tête d'accroche (31a, 31b) formant l'extrémité du brin, et **en ce que** la tête d'accroche (31a, 31b) est venu de matière avec le brin (30a, 30b) du bracelet (30).

10. Objet portable (10) selon l'une des revendications précédentes, **caractérisé en ce que** les têtes d'accroche (31a, 31b) sont en matière polymère, préférentiellement en matière thermoplastique.

11. Objet portable (10) selon l'une des revendications précédentes, **caractérisé en ce que** les têtes d'accroche (31a, 31b) sont en élastomère thermoplastique.

12. Objet portable (10) selon l'une des revendications précédentes, **caractérisé en ce que** la carrure (21) du boitier (20) est en thermoplastique, préférentiellement en polyamide 11.

13. Objet portable (10) selon l'une des revendications précédentes, **caractérisé en ce que** le système de fixation (100) est configuré pour permettre le montage du bracelet (30) indifféremment par une première extrémité ou par une deuxième extrémité de la cavité longitudinale (110a, 110b).

14. Objet portable (10) selon l'une des revendications précédentes, **caractérisé en ce que** les cavités longitudinales (110a, 110b) s'étendent sur deux segments circulaires de la carrure (21) situés à 6h et à 12h.

15. Objet portable (10) selon l'une des revendications précédentes, **caractérisé en ce que** l'objet portable est une montre bracelet.

## Patentansprüche

1. Tragbarer Gegenstand (10), der ein Gehäuse (20), das einen Mittelteil (21) aufweist, ein Armband (30) und ein Befestigungssystem (100) beinhaltet, um jedes Ende des Armbands (30) lösbar mit dem Mittelteil (21) zu verbinden, wobei der Mittelteil (21) zwei längliche Hohlräume (110a, 110b) beinhaltet, die konfiguriert sind, um eine Gleitschiene zu bilden, wobei jedes Ende des Armbands (30) einen Anhängekopf (31a, 31b) in ergänzender Form beinhaltet, und der konfiguriert ist, um durch Gleiten mit einem der länglichen Hohlräume (110a, 110b) zusammenzuwirken, um das Befestigungssystem (100) zu bilden, wobei das Befestigungssystem (100) elastische Einschalungsmittel (210, 211, 212, 213) beinhaltet, um die axiale Bewegung des Anhängekopfes (31a, 31b) im Inneren des länglichen Hohlraums (110a, 110b) zu verriegeln, wobei der tragbare Gegenstand (10) **dadurch gekennzeichnet ist, dass** die elastischen Einschalungsmittel (210, 211, 212, 213) beinhalten:
- einen starren Verriegelungsvorsprung (210), der an einer Innenwand eines jeden der länglichen Hohlräume (110a, 110b) eingearbeitet ist, und zusammenwirkt mit;
- zwei Hindernissen (211, 212), die in der Nähe eines elastischen Abschnitts (231) der Anhängeköpfe (31a, 31b) eingearbeitet sind, wobei die Hindernisse (211, 212) einen Raum zwischen den Hindernissen (213) begrenzen, der bemessen ist, um den Verriegelungsvorsprung (210) aufzunehmen und Mittel zum Blockieren des Verriegelungsvorsprungs (210) zu bilden;
- den elastischen Einschalungsmittel (210, 211, 212, 213), die konfiguriert sind, um den elastischen Abschnitt (231) des Anhängekopfes (31a, 31b) beim Einsetzen des Armbands (30) elastisch zu verformen, um den Durchgang des Verriegelungsvorsprungs (210) über die Hindernisse (211, 212) hinaus zu ermöglichen, und den Verriegelungsvorsprung (210) in dem Raum zwischen den Hindernissen (213), der die axiale Bewegung des Anhängekopfes (31a, 31b) durch elastische Rückstellung des elastischen Abschnitts (231) verriegelt, zu blockieren.

2. Tragbarer Gegenstand (10) nach Anspruch 1, **dadurch gekennzeichnet, dass** die elastischen Einschalungsmittel (210, 211, 212, 213) konfiguriert sind, um den elastischen Abschnitt (231) des Anhängekopfes (31a, 31b) in Richtung des Bodens (112) des länglichen Hohlraums (110a, 110b) elastisch zu verformen.

3. Tragbarer Gegenstand (10) nach einem der vorstehenden Ansprüche, **dadurch gekennzeichnet, dass** der elastische Abschnitt (231) der Anhängeköpfe (31a, 31b) ein Bereich mit geringerer Dicke ist, der durch eine Aussparung (232) gebildet wird, die im Bereich des Endes der Anhängeköpfe (31a, 31b) eingearbeitet ist.

4. Tragbarer Gegenstand (10) nach einem der vorstehenden Ansprüche, **dadurch gekennzeichnet, dass** die Anhängeköpfe (31a, 31b) eine Nut (220) beinhalten, die bemessen ist, um den Verriegelungsvorsprung (210) aufzunehmen, wobei die beiden Hindernisse (211, 212) in die Nut (220) eingearbeitet sind.

5. Tragbarer Gegenstand (10) nach dem vorstehenden Anspruch, **dadurch gekennzeichnet, dass** die Nut (220) in den Bereich einer unteren Oberfläche der Anhängeköpfe (31a, 31b) eingearbeitet ist.

6. Tragbarer Gegenstand (10) nach einem der vorstehenden Ansprüche, **dadurch gekennzeichnet, dass** die beiden Hindernisse (211, 212), die in der Nähe des elastischen Abschnitts (231) der Anhängeköpfe (31a, 31b) eingearbeitet sind, eine Rampenform aufweisen, wobei die dicksten Abschnitte der Rampen den Raum zwischen den Hindernissen (231) begrenzen.

7. Tragbarer Gegenstand (10) nach dem vorstehenden Anspruch, **dadurch gekennzeichnet, dass** die beiden rampenförmigen Hindernisse (211, 212) eine geneigte Ebene aufweisen, die in der Gleitrichtung des Anhängekopfes (31a, 31b) im länglichen Hohlraum (110a, 110b) ausgerichtet ist.

8. Tragbarer Gegenstand (10) nach einem der vorstehenden Ansprüche, **dadurch gekennzeichnet, dass** die elastischen Einschalungsmittel (210, 211, 212, 213) konfiguriert sind, um umkehrbar zu sein, und die Entriegelung der axialen Position der Anhängeköpfe (31a, 31b) ohne Beschädigung eines der Elemente zu ermöglichen, aus denen die elastischen Einschalungsmittel bestehen.

9. Tragbarer Gegenstand (10) nach einem der vorstehenden Ansprüche, **dadurch gekennzeichnet, dass** das Armband (30) zwei Stränge (30a, 30b) beinhaltet, wobei jeder Strang einen Anhängekopf (31a, 31b) beinhaltet, der das Ende des Strangs bildet, und dadurch, dass der Anhängekopf (31a, 31b) aus einem Werkstoff gemeinsam mit dem Strang (30a, 30b) des Armbands (30) gefertigt ist.

10. Tragbarer Gegenstand (10) nach einem der vorstehenden Ansprüche, **dadurch gekennzeichnet, dass** die Anhängeköpfe (31a, 31b) aus Polymermaterial, vorzugsweise aus thermoplastischem Material sind.

11. Tragbarer Gegenstand (10) nach einem der vorstehenden Ansprüche, **dadurch gekennzeichnet, dass** die Anhängeköpfe (31a, 31b) aus thermoplastischem Elastomer sind.

12. Tragbarer Gegenstand (10) nach einem der vorstehenden Ansprüche, **dadurch gekennzeichnet, dass** der Mittelteil (21) des Gehäuses (20) aus Thermoplast, vorzugsweise aus Polyamid 11 ist.

13. Tragbarer Gegenstand (10) nach einem der vorstehenden Ansprüche, **dadurch gekennzeichnet, dass** das Befestigungssystem (100) konfiguriert ist, um die Montage des Armbands (30) gleichermaßen durch ein erstes Ende oder durch ein zweites Ende des länglichen Hohlraums (110a, 110b) zu ermöglichen.

14. Tragbarer Gegenstand (10) nach einem der vorstehenden Ansprüche, **dadurch gekennzeichnet, dass** sich die länglichen Hohlräume (110a, 110b) über zwei Kreissegmente des Mittelteils (21) erstrecken, die sich bei 6 Uhr und 12 Uhr befinden.

15. Tragbarer Gegenstand (10) nach einem der vorstehenden Ansprüche, **dadurch gekennzeichnet, dass** der tragbare Gegenstand eine Armbanduhr ist.

## Claims

1. Wearable object (10) comprising a case (20) having a middle (21), a bracelet (30), and a fastening system (100) for removably securing each end of said bracelet (30) to the middle (21), the middle (21) comprising two longitudinal cavities (110a, 110b) configured to form a slide-bar, each end of the bracelet (30) comprising a hooking head (31a, 31b) of complementary shape and configured to cooperate by sliding with one of the longitudinal cavities (110a, 110b) to form the fastening system (100), the fastening system (100) comprising elastic casing means (210, 211, 212, 213) to bolt the axial movement of said hooking head (31a, 31b) inside the longitudinal cavity (110a, 110b), said wearable object (10) being **characterised in that** the elastic casing means (210, 211, 212, 213) comprise:
- a rigid bolting protrusion (210), arranged on an inner wall of each of the longitudinal cavities (110a, 110b), cooperating with;
- two obstacles (211, 212) arranged in the vicinity of an elastic portion (231) of the hooking heads (31a, 31b), the obstacles (211, 212) delimiting an inter-obstacle space (213) designed to receive the bolting protrusion (210) and form locking means of the bolting protrusion (210);
- the elastic casing means (210, 211, 212, 213) being configured to elastically distort the elastic portion (231) of the hooking head (31a, 31b) during the insertion of the bracelet (30), so as to allow the passage of the bolting protrusion (210) beyond the obstacles (211, 212) and lock the bolting protrusion (210) in the inter-obstacle space (213) bolting the axial movement of the hooking head (31a, 31b) by elastic return of the elastic portion (231).

2. Wearable object (10) according to claim 1, **characterised in that** the elastic casing means (210, 211, 212, 213) are configured to elastically distort the elastic portion (231) of the hooking head (31a, 31b) in the direction of the bottom (112) of the longitudinal cavity (110a, 110b).

3. Wearable object (10) according to one of the preceding claims, **characterised in that** the elastic portion (231) of the hooking heads (31a, 31b) is a zone of lesser thickness formed by a hollow (232) arranged at the end of the hooking heads (31a, 31b).

4. Wearable object (10) according to one of the preceding claims, **characterised in that** the hooking heads (31a, 31b) comprise a groove (220) designed to receive the bolting protrusion (210), the two obstacles (211, 212) being arranged in the groove (220).

5. Wearable object (10) according to the preceding claim, **characterised in that** the groove (220) is arranged at a bottom surface of the hooking heads (31a, 31b).

6. Wearable object (10) according to one of the preceding claims, **characterised in that** the two obstacles (211, 212) arranged in the vicinity of the elastic portion (231) of the hooking heads (31a, 31b) have a ramp shape wherein the thicker portions of the ramps delimit the inter-obstacle space (231).

7. Wearable object (10) according to the preceding claim, **characterised in that** the two ramp-shaped obstacles (211, 212) have an inclined plane oriented in the direction of sliding of the hooking head (31a, 31b) in the longitudinal cavity (110a, 110b).

8. Wearable object (10) according to one of the preceding claims, **characterised in that** the elastic casing means (210, 211, 212, 213) are configured to be reversible and enable the release of the axial position of the hooking heads (31a, 31b) without damaging one of the elements forming the elastic casing means.

9. Wearable object (10) according to one of the preceding claims, **characterised in that** the bracelet (30) comprises two strands (30a, 30b), each strand comprising a hooking head (31a, 31b) forming the end of the strand, and **in that** the hooking head (31a, 31b) is integral with the strand (30a, 30b) of the bracelet (30).

10. Wearable object (10) according to one of the preceding claims, **characterised in that** the hooking heads (31a, 31b) are made of polymer material, preferably of thermoplastic material.

11. Wearable object (10) according to one of the preceding claims, **characterised in that** the hooking heads (31a, 31b) are made of thermoplastic elastomer.

12. Wearable object (10) according to one of the preceding claims, **characterised in that** the middle (21) of the case (20) is made of thermoplastic, preferably of polyamide 11.

13. Wearable object (10) according to one of the preceding claims, **characterised in that** the fastening system (100) is configured to enable the fitting of the bracelet (30) either by a first end or by a second end of the longitudinal cavity (110a, 110b).

14. Wearable object (10) according to the preceding claims, **characterised in that** the longitudinal cavities (110a, 110b) extend over two circular segments of the middle (21) located at 6 o'clock and at 12 o'clock.

15. Wearable object (10) according to one of the preceding claims, **characterised in that** the wearable object is a wristwatch.
